# FASCICULE DE BREVET EUROPEEN

(11) **EP 4 093 958 B1**
(45) Date de publication et mention de la délivrance du brevet: **28.02.2024**
(21) Numéro de dépôt: 21719684.9
(22) Date de dépôt: 13.01.2021
(51) Int. Cl.: F02C 7/224, F02C 7/22, F23R 3/28

(54) **CIRCUIT D'ALIMENTATION EN CARBURANT POUR UNE CHAMBRE DE COMBUSTION D'UNE TURBOMACHINE**
KRAFTSTOFFVERSORGUNGSSCHALTUNG FÜR EINE BRENNKAMMER EINER TURBOMASCHINE
FUEL SUPPLY CIRCUIT FOR A COMBUSTION CHAMBER OF A TURBOMACHINE

(30) Priorité: 21.01.2020 FR 2000578
(43) Date de publication de la demande: 30.11.2022
(73) Titulaire: SAFRAN AIRCRAFT ENGINES, 75015 Paris (FR)
(72) Inventeur: KERUZORE, Nicolas Marie, 77550 MOISSY-CRAMAYEL (FR)
(74) Mandataire: Gevers & Orès
(86) Numéro de dépôt international: PCT/FR2021/050052
(87) Numéro de publication internationale: WO 2021/148738

(56) Documents cités:
- FR-A1- 2 945 837
- US-A1- 2004 194 627
- US-A1- 2018 111 063

## Description

### Domaine technique de l'invention

La présente invention concerne un circuit d'alimentation en carburant pour une chambre de combustion d'une turbomachine, en particulier d'aéronef. Elle concerne notamment un perfectionnement permettant d'éviter la cokéfaction du carburant dans les injecteurs équipant la chambre de combustion.

### Arrière-plan technique

L'état de la technique comprend notamment les documents US-A1-2018/111063 et US-A1 -2004/194627.

Une turbomachine d'aéronef comprend un générateur de gaz comportant notamment un ou plusieurs compresseurs, par exemple basse pression et haute pression, disposé(s) en amont d'une chambre de combustion.

Par convention, dans la présente demande, les termes « amont » et « aval » sont définis par rapport au sens de circulation des gaz dans la turbomachine. De même, par convention dans la présente demande, les termes « interne » et « externe » sont définis radialement par rapport à l'axe longitudinal de la turbomachine, qui est notamment l'axe de rotation des rotors des compresseurs.

Traditionnellement, la chambre de combustion est annulaire et placée dans une enceinte annulaire délimitée radialement par un carter annulaire externe et un carter annulaire interne. La chambre de combustion comprend des parois annulaires interne et externe coaxiales réunies en amont par un fond de chambre, également annulaire, et sensiblement transversal.

La chambre de combustion est alimentée en air comprimé provenant du compresseur haute pression via notamment un diffuseur annulaire, et en carburant via un circuit d'alimentation en carburant comportant des injecteurs répartis angulairement autour de l'axe de la turbomachine.

Conventionnellement, le circuit d'alimentation en carburant peut comprendre les éléments suivants ici cités dans le sens de l'écoulement du carburant d'amont en aval : un réservoir de carburant pour le stockage du carburant, une pompe basse pression BP assurant l'alimentation du carburant issu du réservoir, une unité de filtration du carburant, une pompe haute pression HP, une unité de dosage du flux total de carburant délivré aux injecteurs, usuellement nommée FMU (pour « Fuel Metering Unit »), délivrant en sortie un flux total de carburant éventuellement réparti en aval entre une ou plusieurs rampes d'injection, et un ensemble d'injecteurs de carburant dans la chambre de combustion.

Le circuit d'alimentation utilise généralement comme carburant du kérosène ou du bio-kérosène. Le kérosène est un mélange d'hydrocarbures contenant principalement des alcanes. Il est issu du raffinage du pétrole et théoriquement exempt de soufre. Le bio-kérosène est un carburant alternatif, produit à partir de la biomasse, tel que du sucre de canne. Ces carburants présentent dans la réalité, une propension à l'oxydation et à la pyrolyse lorsque qu'ils sont soumis à des températures supérieures à 150°C. Aussi, la présence d'oxygène dissous dans le kérosène et de composés soufrés, mène à la décomposition de ce dernier en divers produits de réaction à l'origine du dépôt et de l'encrassement des systèmes hydromécaniques. Ces conditions de dégradation de carburant sont régulièrement réunies lors du passage du kérosène dans les injecteurs.

Les demandes FR-A1-2 918 716, FR-A1-2 925 146, FR-A1-2 941 288, et FR-A1-2 975 467 décrivent des exemples d'un système d'injection comportant des injecteurs pour turbomachine.

Ces injecteurs, qui sont généralement placés au niveau du fond de chambre, sont soumis à des sollicitations thermiques intenses, en particulier lors des points de ralenti ou d'arrêt de la turbomachine. Lorsque ces points de fonctionnement sont vus trop fréquemment, la dégradation du carburant peut provoquer l'apparition de dépôts de coke de carburant en paroi des injecteurs. Ce dépôt pouvant, sur le long terme, dégrader les performances d'injection et donc des performances générales de la turbomachine.

Les paramètres principaux agissant sur le phénomène de cokéfaction sont la température du carburant en paroi, et les concentrations en réactifs à l'origine des précurseurs de dépôt.

Une solution à ce phénomène de cokéfaction, est de réaliser une protection thermique sur le corps et le coude des injecteurs, de manière à abaisser les niveaux de température en paroi interne de l'injecteur sur les points de fonctionnement du moteur lorsque le flux du carburant est débitant dans les injecteurs. Néanmoins sur les points de ralenti ou d'arrêt de la turbomachine, lorsque le flux de carburant n'est que très peu ou plus débitant, les protections thermiques ne permettent pas d'empêcher l'augmentation de la température des injecteurs au-dessus des températures critiques de formation de dépôt. Une alternative à ce phénomène de cokéfaction, est le nettoyage des rampes et des injecteurs avec une solution nettoyante. Un chariot mobile comprenant un réservoir rempli de solution nettoyante, est acheminé jusqu'à la chambre de combustion, la solution nettoyante étant ensuite injectée dans les injecteurs lorsque la turbomachine est à l'arrêt. Cette alternative permet d'enlever directement une partie du dépôt de coke en carburant lorsque la turbomachine est à l'arrêt au sol, sans démontage du moteur et des injecteurs. Cependant, les particules de coke dissoutes ou issues du décapage du nettoyage peuvent venir boucher l'injecteur, ou le dégrader définitivement. Par ailleurs, ce processus de nettoyage est, d'une part, couteux se faisant uniquement lorsque la turbomachine est en maintenance, et d'autre part, nécessite des contrôles fréquents et réguliers durant toute la vie de la turbomachine.

Il est également connu d'utiliser des revêtements anti-cokéfaction sur les parois des injecteurs. Cependant, ces revêtements ne constituent pas une solution suffisamment efficace pour limiter le dépôt de carburant dans les injecteurs et pour empêcher une maintenance prématurée de la turbomachine. Ces revêtements permettent au mieux, d'améliorer l'efficacité des produits de nettoyage de la turbomachine en maintenance.

Dans ce contexte, il est intéressant de pallier les inconvénients de l'art antérieur, en proposant un circuit d'alimentation en carburant d'une chambre de combustion fiable et à durée de vie améliorée, tout en permettant son assemblage simple et rapide dans une turbomachine.

### Résumé de l'invention

L'invention concerne un circuit d'alimentation en carburant pour une chambre de combustion d'une turbomachine, en particulier d'aéronef, comprenant :
- une pompe d'alimentation en carburant, ladite pompe étant configurée pour fournir un flux de carburant à un débit prédéterminé,
- plusieurs injecteurs de carburant, et
- une rampe de liaison de la pompe aux injecteurs.

Selon l'invention, le circuit comprend en outre un dispositif de traitement thermique du carburant comportant une chambre reliée, d'une part, à une entrée de carburant reliée à la pompe, et d'autre part, à une sortie de carburant reliée à la rampe, des éléments de chauffage étant situés dans cette chambre et étant configurés pour chauffer le flux de carburant fourni par la pompe jusqu'à une température prédéterminée de façon à provoquer une cokéfaction du carburant au sein de la chambre.

Selon l'invention, lesdits éléments de chauffage comprennent au moins un tube métallique perforé qui comprend des orifices de passage de carburant et qui est associé à une électrode de chauffage en vue du chauffage du tube et donc du carburant traversant le tube

L'invention permet, grâce à la présence du dispositif de traitement thermique de carburant, de provoquer la formation et le dépôt de coke de carburant dans une zone localisée du circuit d'alimentation, de préférence éloignée de la chambre de combustion. Cette zone est située en aval de la pompe d'alimentation en carburant et en amont de la rampe de liaison aux injecteurs. Ceci permet de réguler facilement la formation de dépôt et d'encrassement de carburant dans le dispositif sans altérer les performances des équipements de carburant (tels que les injecteurs), et de manière générale les performances de la turbomachine. En effet, le flux de carburant sortant de la pompe est dégradé et oxydé par chauffage dans la chambre du dispositif. Les réactifs de réaction d'oxydation du carburant (l'oxygène dissous et les précurseurs de Soufre) sont donc consommés avant d'arriver dans les injecteurs. Ainsi, le carburant (qui est débarrassé de ses produits de réaction) peut passer dans les injecteurs sans les encrasser, même lorsque les sollicitations thermiques sont importantes et que les conditions cokéfiantes de température sont réunies.

De manière générale, le dispositif de l'invention permet de centraliser le traitement thermique du carburant sur la turbomachine. Plus particulièrement, la cokéfaction de carburant est déplacée en amont des injecteurs dans une zone facile d'accès lors d'une maintenance. Ceci permet ainsi d'augmenter la durée de vie des injecteurs dont le remplacement est une opération lourde et onéreuse, et, par voie de conséquence, de réduire le risque de dépose prématurée de la turbomachine contenant le système d'injection.

L'invention présente ainsi l'avantage de proposer une conception simple, offrant une très grande fiabilité, et peu pénalisante en termes de coûts et d'encombrement de la turbomachine.

Le système selon l'invention peut comprendre une ou plusieurs des caractéristiques suivantes, prises isolément les unes des autres ou en combinaison les unes avec les autres :
- une conduite de dérivation dudit dispositif, cette conduite s'étendant entre la pompe et la rampe et permet à un flux de carburant de sortir de la pompe et d'alimenter la rampe ans passer par ledit dispositif,
- la conduite de dérivation est équipée d'une vanne, par exemple à clapet, qui est configuré pour adopter, d'une part, une position ouverte dans laquelle le flux de carburant passant par la conduit est maximal, et d'autre part, une position fermée dans laquelle ce flux est nul,
- le circuit comprend en outre une unité de dosage de carburant qui est relié audit dispositif et qui est configuré pour contrôler lesdits éléments de chauffage,
- ladite unité est configurée pour piloter la vanne en fonction d'un paramètre du flux de carburant fourni par la pompe, tel que la pression du flux de carburant,
- chacun desdits éléments de chauffage comprend des tubes métalliques engagés coaxialement les uns dans les autres,
- le ou chaque tube comprend une paroi formée par un treillis ou un tamis métallique,
- au moins un joint, de préférence en céramique, d'étanchéité au carburant et/ou diélectrique est disposé entre lesdits treillis ou tamis métalliques des éléments chauffants,
- le dispositif comprend des moyens de refroidissement du flux de carburant sortant de la chambre ou de la conduite de dérivation,
- le dispositif est relié de manière amovible à la pompe et à la rampe,
- le dispositif est configuré pour être fixé sur un carter de la chambre de combustion par des moyens de fixation, de préférence amovible, tels que des boulons,
- les orifices du ou des tubes a un diamètre compris entre 0,1 et 1 mm,
- les éléments de chauffage sont configurés pour fournir une température de chauffage comprise entre 200 et 300°C, de préférence de l'ordre de 250°C.

L'invention concerne aussi une turbomachine, en particulier d'aéronef, comportant un dispositif de traitement thermique de carburant tel que décrit ci-dessus.

La turbomachine peut être un turbopropulseur ou un turboréacteur.

L'invention concerne également un procédé d'alimentation en carburant d'une chambre de combustion de turbomachine, au moyen d'un dispositif de traitement thermique de carburant tel que décrit ci-dessus. Ce procédé comprenant une étape de contrôle des éléments de chauffage en vue du chauffage du carburant uniquement lorsqu'un paramètre du flux de carburant fourni par la pompe est inférieur à un seuil prédéterminé.

L'invention concerne également un procédé de maintenance d'un circuit d'alimentation en carburant d'une chambre de combustion de turbomachine, en particulier d'aéronef, le circuit comportant un dispositif de traitement thermique de carburant tel que décrit ci-dessus. Ce procédé de maintenance comporte une étape de démontage et de remplacement du dispositif comportant une chambre encrassée par des dépôts de coke de carburant, par un nouveau dispositif.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une demi vue schématique en coupe axiale d'un circuit d'alimentation en carburant pour une chambre de combustion d'une turbomachine ;
[Fig.2] la figure 2 est une vue schématique partielle d'un circuit d'alimentation en carburant selon un mode de réalisation de l'invention, et montre un dispositif de traitement thermique et une conduite de dérivation ;
[Fig.3] la figure 3 est une vue schématique en coupe d'un élément de chauffage du dispositif de la figure2 ;
[Fig.4] la figure 4 est une vue schématique en coupe selon la ligne IV-IV de la figure 2 ;
[Fig.5] la figure 5 est une autre vue très schématique d'un circuit selon l'invention.

### Description détaillée de l'invention

D'une manière générale, dans la description ci-après, les termes « longitudinal » et « axial » qualifient l'orientation d'éléments structurels s'étendant selon la direction d'un axe longitudinal X. Cet axe X peut être confondu avec un axe de rotation d'un rotor d'une turbomachine. Les termes « radial » ou « vertical » qualifient une orientation d'éléments structurels s'étendant selon une direction perpendiculaire à l'axe X. Les termes « intérieur » et « extérieur », et « interne » et « externe » sont utilisés en référence à un positionnement par rapport à l'axe X. Ainsi, un élément structurel s'étendant selon l'axe X comporte une face intérieure tournée vers l'axe X et une surface extérieure, opposée à sa surface intérieure. Dans la présente demande, les termes « amont » et « aval » sont définis par rapport au sens de circulation des gaz dans la turbomachine.

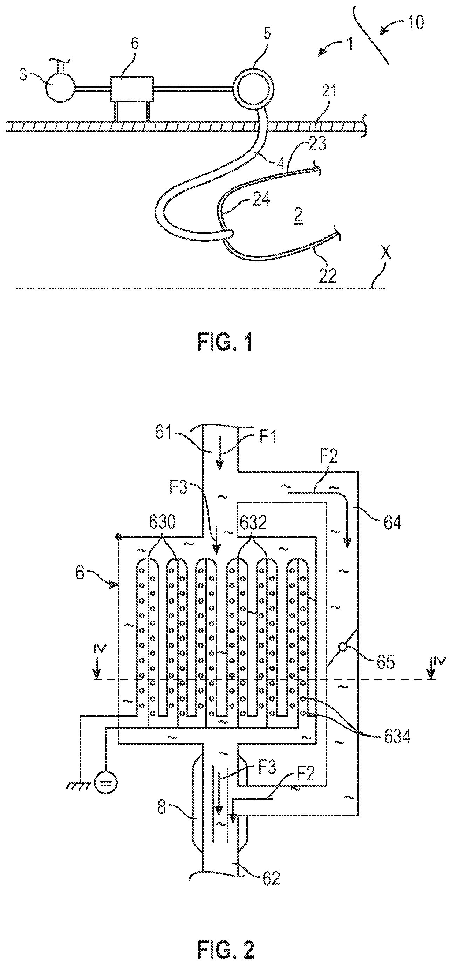

Sur la figure 1 est représentée une chambre de combustion 2 annulaire d'un générateur de gaz d'une turbomachine 10, de préférence d'aéronef.

La chambre de combustion 2 est placée en aval d'un ou plusieurs compresseurs, par exemple basse pression et haute pression, et en amont d'une ou plusieurs turbines, par exemple haute pression et basse pression (non représentés sur la figure 1).

La chambre de combustion 2 fait partie d'une turbomachine 10 présentant un axe X longitudinal qui est notamment l'axe de rotation des rotors des compresseurs et turbines.

La chambre de combustion 2 est placée dans une enceinte annulaire délimitée radialement par un carter annulaire externe 21 et un carter annulaire interne (non représenté).

La chambre de combustion 2 comprend des parois annulaires interne 22 et externe 23 coaxiales réunies en amont par un fond de chambre 24 annulaire et sensiblement transversal.

La chambre de combustion 2 est alimentée en air comprimé par le compresseur haute pression via un diffuseur annulaire (non représenté sur la figure), et en carburant via un circuit d'alimentation en carburant 1.

Sur la figure 1, le circuit d'alimentation en carburant 1 comprend :
- une pompe d'alimentation en carburant 3 configurée pour fournir un flux de carburant F1 à un débit prédéterminé,
- des dispositifs d'injection ou injecteurs 4 débouchant dans la chambre de combustion 2, et
- une rampe de liaison 5 reliant la pompe 3 aux injecteurs 4.

L'une des particularités de l'invention réside dans le fait que le circuit 1 comprend également un dispositif de traitement thermique de carburant 6. Le dispositif 6 est situé en aval de la pompe 3 et en amont de la rampe 5 et des injecteurs 4. Le dispositif 6 peut être fixé de manière amovible sur le carter externe 23 par des fixations (telles que des boulons).

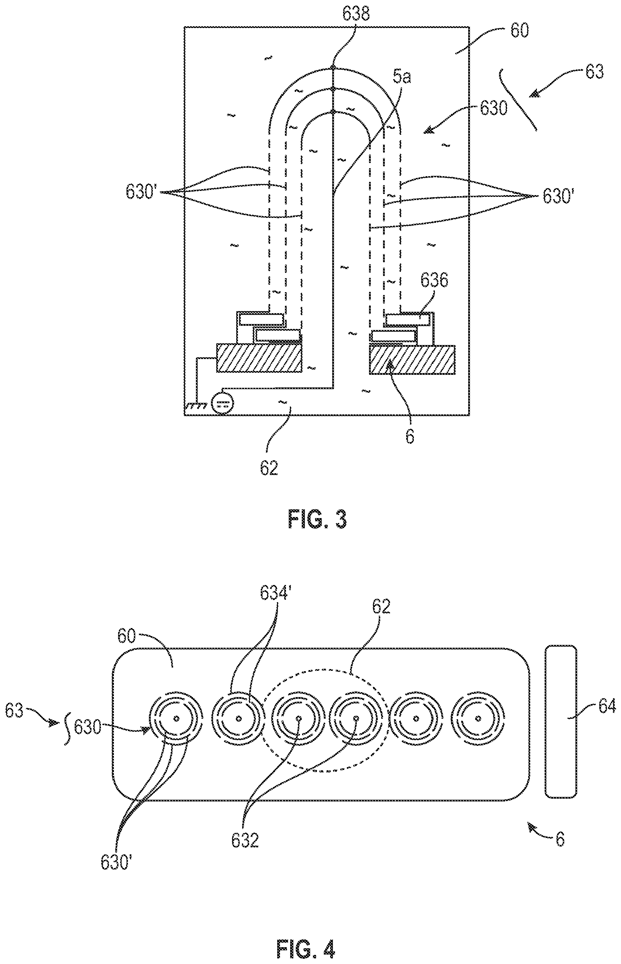

En référence aux figures 2 et 3, le dispositif 6 comprend une chambre 60 reliée, d'une part, à une entrée de carburant 61, et d'autre part, à une sortie de carburant 62. L'entrée 61 et la sortie 62 de carburant peuvent être un conduit d'écoulement du carburant. Sur l'exemple et de façon non-limitative, la chambre 60 a une forme générale parallélépipédique.

La chambre 60 comprend des éléments de chauffage 63. Ces éléments 63 comprennent au moins un tube 630 associé à au moins une électrode de chauffage 632 apte à chauffer le tube 630. L'électrode 632 peut être disposée coaxialement au tube 630. Le tube 630 comprend des orifices de passage de carburant 634. Sur les figures 2 et 3, la chambre 60 comprend six tubes 630 cylindriques qui sont disposés longitudinalement par rapport à l'axe X et parallèlement les uns des autres. Les tubes 630 de la chambre 60 peuvent également être disposés verticalement par rapport à l'axe X.

En référence aux figures 3 et 4, chaque tube 630 est formé d'au moins trois sous-tubes 630' pouvant être coaxiaux ou concentriques entre eux. Les sous-tubes 630' peuvent être perforés et comprendre des orifices 634'. Sur la figure 4, les tubes 630 sont coaxiaux et chaque tube 630 est formé de trois sous-tubes 630' concentriques. Les sous-tubes 630' permettent notamment de créer plusieurs niveaux de filtration et de dépôt de carburant dans la chambre 60.

Sur la figure 3, les sous-tubes 630' sont reliés entre eux de manière étanche au carburant par un joint 636 qui peut être réalisé dans un matériau diélectrique. Par exemple, un joint 636 en céramique permet de résister à un fort gradient thermique. Sur l'exemple, l'électrode 632 est disposée de manière générale au centre du tube 630. L'électrode 632 peut être connectée aux sous-tubes 630' par un joint d'étanchéité 638 en métal.

Le tube 630 peut être en matériau métallique, tel qu'un acier en inox. Le tube 630 ou les sous-tubes 630' peuvent comprendre des parois réalisées en treillis ou en tamis métallique.

Sur la figure 2, le circuit comprend une conduite de dérivation 64 qui s'étend entre l'entrée 61 et la sortie 62. La conduite 64 peut être équipée d'une vanne 65, par exemple à clapet, apte à adopter une position ouverte et une position fermée. Lorsque la vanne 65 est en position fermée, le passage de carburant dans la conduite de dérivation 64 est bloqué. Le débit de passage est nul. Lorsque la vanne 65 est en position ouverte, le carburant peut circuler dans la conduite 64. Le débit de passage est alors maximal.

Le dispositif 6 peut également comprendre des moyens de refroidissement 8 de la sortie 62. De manière non limitative, ces moyens 8 peuvent être un échangeur thermique, des ailettes formées en saillie sur une conduite de liaison de la sortie du dispositif à la rampe, etc.

Le circuit 1 peut également comprendre une unité de dosage 7 permettant généralement de réguler le dispositif 6 de l'invention de façon centralisée et automatique.

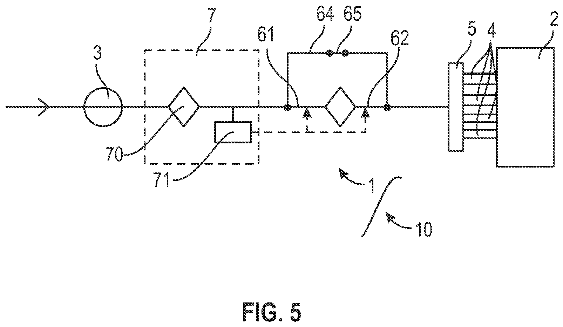

Ainsi, en référence à la figure 5, le circuit 1 peut comprendre les éléments suivants ici cités dans le sens de l'écoulement du carburant d'amont en aval :
- la pompe 3 assurant l'alimentation du carburant, par exemple issu d'un réservoir disposé en amont de la pompe 3,
- l'unité de dosage 7 du flux total de carburant comportant un régulateur du flux de carburant 71 et/ou un filtre autonettoyant 70 disposé en amont du régulateur 71,
- le dispositif de traitement thermique de carburant 6, et
- une rampe de liaison 5 du dispositif 6 aux injecteurs 4 disposés et débouchant sur la chambre de combustion 2.

Nous allons maintenant décrire un procédé d'alimentation en carburant de la chambre de combustion 2 de turbomachine au moyen du circuit d'alimentation 1 équipé du dispositif 6 de l'invention.

En référence aux figures 2 et 5, le dispositif 6 est alimenté par un premier flux de carburant F1 fournit directement par la pompe 3 avec ou sans régulation par l'unité de dosage 7.

Le premier flux F1 se divise en un second flux de carburant F2 ou un troisième flux de carburant F3 au niveau de l'entrée 61 du dispositif 6. Le second flux F2 passe par la conduite de dérivation 64 jusqu'à la sortie 62 du dispositif lorsque la vanne 65 est en position ouverte. Le troisième flux F3 passe dans la chambre 60 jusqu'à la sortie 62 lorsque la vanne 65 est en position fermée. Le troisième flux F3 est chauffé par les éléments chauffants 63 pour générer des dépôts de carburant au sein de la chambre 60.

Les positions ouverte et fermée de la vanne 65 peuvent être pilotées par l'unité de dosage 7, plus particulièrement par le régulateur 71, en fonction d'un paramètre de mesure du flux de carburant. Ce paramètre, tel qu'une pression ou un débit du flux, peut être mesuré par un capteur. Ce capteur est configuré pour mesurer la pression et/ou le débit du flux de carburant soit en sortie de la pompe 3, soit en entrée du dispositif 6 (à savoir le premier flux F1).

De même, l'unité de dosage 7, de préférence le régulateur 71, peut également contrôler les éléments de chauffage 63. Ce contrôle des éléments 63 peut être réalisé en vue de chauffage du carburant lorsqu'un paramètre du flux de carburant fourni par la pompe 3 est inférieur à un seuil prédéterminé. Ce seuil peut être un niveau de pression prédéterminé du premier flux F1 qui est mesuré par le capteur.

En fonctionnement de la turbomachine (par exemple en plein gaz, en phase de montée ou pendant le mode « Cruise »), la vanne 65 adopte la position ouverte et le second flux F2 passant par la conduite 64 est maximal. Le premier flux F1 mesuré est ainsi supérieur au seuil prédéterminé. Ceci permet d'alimenter en carburant la rampe 5 et les injecteurs 4 en passant par la conduite de dérivation 64 et donc en court-circuitant la chambre 60 du dispositif.

Lorsque la turbomachine va être mise à l'arrêt ou en fonctionnement ralenti (en phase d'approche de l'aéronef par exemple), la vanne 65 adopte la position fermée et le second flux F2 passant par la conduite 64 est nul. Le premier flux F1 mesuré est ainsi inférieur au seuil prédéterminé. Ceci permet d'alimenter la rampe 5 et les injecteurs 4 après chauffage du troisième flux F3 dans la chambre 60. En effet, le carburant passe au travers des tubes 630, des orifices 634, 634' et des sous-tubes 630' pour y être chauffé et débarrassé de ces composés de réaction (oxygène dissous et précurseurs type soufre). De préférence, le ou les tubes 630 sont chauffés à une température comprise entre 200 et 300°C, plus particulièrement à 250°C, pour former le dépôt de coke par oxydation du carburant. Ce dispositif de l'invention ne permet pas de chauffer le ou les tubes à une température supérieure à 400°C pour éviter notamment la pyrolyse du carburant.

Par ailleurs, la consommation des composés peut être générée par un courant électrique de l'ordre de 5kW dans le ou les tubes 630 par l'électrode 632 associée.

Plus particulièrement, la circulation du courant électrique provoque un échauffement local (par exemple à 250°C), de façon à forcer le carburant et ces composés à précipiter en surface du ou des tubes 630 et former une cokéfaction ou un encrassement de carburant sur les parois du ou des tubes 630. Dans cette configuration, la grande surface d'oxydation du carburant permet au dispositif de ne pas se boucher rapidement. Ce qui n'est, par exemple, pas le cas des injecteurs qui comportent une ou plusieurs canalisations de petit diamètre dans laquelle une cokéfaction peut facilement boucher les injecteurs.

Au niveau de cette sortie 62, les moyens 8 permettent de refroidir le flux F3 sortant de la chambre 60. Ceci permet de limiter les températures de carburant trop élevées en entrée de la rampe 5 et des injecteurs 4 lorsque les éléments de chauffage sont utilisés.

Lorsque la chambre 60 comprend plusieurs tubes 630, chaque tube 630 peut fonctionner indépendamment les uns des autres ou en simultanée. Dans le cas où les tubes 630 fonctionneraient de façon indépendante, la chambre 60 peut comprendre au moins une vanne et un élément de guidage pour guider le flux de carburant entrant dans la chambre 60 en direction du ou des tubes 630 actifs.

Dans cette description, le dispositif de traitement thermique du carburant est décrit dans une turbomachine, en particulier d'aéronef. Le dispositif de l'invention peut s'adapter aussi dans des systèmes hydromécaniques de turbomachine autre que le domaine de l'aéronautique.

Par ailleurs, on comprend de la présente description que l'efficacité du dispositif au sein du circuit d'alimentation est dépendant de différents paramètres, tels que le nombre et les dimensions des éléments chauffant.

Le dispositif de traitement thermique de carburant selon l'invention apporte plusieurs avantages qui sont notamment de :
- provoquer la formation des dépôts de coke de carburant en amont des injecteurs,
- s'attacher et se détacher facilement du circuit d'alimentation,
- optimiser la durée de vie des injecteurs en empêchant la formation de cokéfaction,
- limiter le coût de maintenance des injecteurs et de la chambre de combustion, et
- s'adapter facilement aux générateurs de gaz existants.

Globalement, cette solution proposée est simple, efficace et économique à réaliser et à assembler sur une turbomachine, tout en assurant une alimentation en carburant optimale et une durée de vie améliorée des injecteurs d'une chambre de combustion.

## Revendications

1. Circuit d'alimentation en carburant (1) pour une chambre de combustion (2) d'une turbomachine (10), en particulier d'aéronef, comprenant :
- une pompe d'alimentation en carburant (3), ladite pompe (3) étant configurée pour fournir un flux de carburant à un débit prédéterminé,
- plusieurs injecteurs (4) de carburant,
- une rampe (5) de liaison de la pompe (3) aux injecteurs (4), et
- un dispositif de traitement thermique du carburant (6) comportant une chambre (60) reliée, d'une part, à une entrée de carburant (61) reliée à la pompe (3) et à une sortie de carburant (62) reliée à la rampe (5), des éléments de chauffage (60) étant situés dans cette chambre (60) et étant configurés pour chauffer le flux de carburant fourni par la pompe (3) jusqu'à une température prédéterminée de façon à provoquer une cokéfaction du carburant au sein de la chambre (60),
le circuit d'alimentation étant **caractérisé en ce que** lesdits éléments de chauffage (63) comprennent au moins un tube métallique (630, 630') perforé qui comprend des orifices de passage de carburant (634, 634') et qui est associé à une électrode de chauffage (632) en vue du chauffage du tube (630) et donc du carburant traversant le tube (630).

2. Circuit selon la revendication précédente, **caractérisé en ce qu'**il comprend une conduite de dérivation (64) dudit dispositif (6), cette conduite (64) s'étendant entre la pompe (3) et la rampe (5) et permettant à un flux de carburant (F2) de sortir de la pompe (3) et d'alimenter la rampe (5) sans passer par ledit dispositif (6).

3. Circuit selon la revendication précédente, dans lequel la conduite de dérivation (64) est équipée d'une vanne (65), par exemple à clapet, qui est configurée pour adopter, d'une part, une position ouverte dans laquelle le flux de carburant (F2) passant par la conduite (64) est maximal, et d'autre part, une position fermée dans laquelle ce flux (F2) est nul.

4. Circuit selon l'une des revendications précédentes, **caractérisé en ce qu'**il comprend en outre une unité de dosage de carburant (7) qui est reliée audit dispositif (6) et qui est configurée pour contrôler lesdits éléments de chauffage (63).

5. Circuit selon la revendication précédente, en dépendance de la revendication 3, **caractérisé en ce que** ladite unité (7) est configurée pour piloter la vanne (65) en fonction d'un paramètre du flux de carburant fourni par la pompe (3), tel que la pression du flux de carburant.

6. Circuit selon l'une des revendications précédentes, **caractérisé en ce que** chacun desdits éléments de chauffage (63) comprend des tubes métalliques (630, 630') engagés coaxialement les uns dans les autres.

7. Circuit selon l'une des revendications précédentes, **caractérisé en ce que** le ou chaque tube (630) comprend une paroi formée par un treillis ou un tamis métallique.

8. Circuit selon la revendication 7, **caractérisé en ce qu'**au moins un joint (636) d'étanchéité et/ou diélectrique est disposé entre lesdits treillis ou tamis métalliques des éléments chauffants (63).

9. Circuit selon l'une des revendications 2 à 8, **caractérisé en ce que** le dispositif (6) comprend des moyens de refroidissement (8) du flux de carburant sortant de la chambre (60) ou de la conduite de dérivation (64).

10. Circuit selon l'une des revendications précédentes, **caractérisé en ce que** les orifices (634, 634') du ou des tubes (630, 630') a un diamètre compris entre 0,1 et 1 mm.

11. Circuit selon l'une des revendications précédentes, **caractérisé en ce que** les éléments de chauffage (63) sont configurés pour fournir une température de chauffage comprise entre 200 et 300°C, de préférence de l'ordre de 250°C.

12. Turbomachine (10), en particulier d'aéronef, comportant un circuit d'alimentation en carburant (1) tel que défini à l'une quelconque des revendications précédentes.

13. Procédé d'alimentation en carburant d'une chambre de combustion (2) de turbomachine (10), en particulier d'aéronef, au moyen d'un circuit d'alimentation en carburant (1) selon l'une des revendications 1 à 11, ce procédé comprenant une étape de contrôle des éléments de chauffage (63) en vue du chauffage du carburant uniquement lorsqu'un paramètre du flux de carburant fourni par la pompe (3) est inférieur à un seuil prédéterminé.

## Patentansprüche

1. Kraftstoffversorgungsschaltung (1) für eine Brennkammer (2) einer Turbomaschine (10), insbesondere eines Luftfahrzeugs, umfassend:
- eine Kraftstoffversorgungspumpe (3), wobei die Pumpe (3) konfiguriert ist, um einen Kraftstoffstrom mit einem vorbestimmten Durchsatz zu liefern,
- mehrere Kraftstoffinjektoren (4),
- eine Rampe (5) zur Verbindung der Pumpe (3) mit den Injektoren (4), und
- eine Vorrichtung zur thermischen Kraftstoffbehandlung (6), umfassend eine Kammer (60), die einerseits mit einem mit der Pumpe (3) verbundenen Kraftstoffeinlass (61) und mit einem mit der Rampe (5) verbundenen Kraftstoffauslass (62) verbunden ist, wobei sich Heizelemente (60) in dieser Kammer (60) befinden und konfiguriert sind, um den von der Pumpe (3) gelieferten Kraftstoffstrom derart bis zu einer vorbestimmten Temperatur zu erhitzen, dass eine Verkokung des Kraftstoffs in der Kammer (60) herbeigeführt wird;
wobei der Versorgungskreislauf **dadurch gekennzeichnet ist, dass** die Heizelemente (63) mindestens ein perforiertes Metallrohr (630, 630') umfassen, das Kraftstoffdurchgangsöffnungen (634, 634') umfasst und das einer Heizelektrode (632) zum Erhitzen des Rohrs (630) und somit des das Rohr (630) durchströmenden Kraftstoffs zugeordnet ist.

2. Schaltung nach dem vorstehenden Anspruch, **dadurch gekennzeichnet, dass** sie eine Abzweigleitung (64) von der Vorrichtung (6) umfasst, wobei sich diese Leitung (64) zwischen der Pumpe (3) und der Rampe (5) erstreckt und ermöglicht, dass ein Kraftstoffstrom (F2) aus der Pumpe (3) austritt und die Rampe (5) versorgt, ohne durch die Vorrichtung (6) hindurchzuströmen.

3. Schaltung nach dem vorstehenden Anspruch, wobei die Abzweigleitung (64) mit einem Ventil (65), beispielsweise einem Rückschlagventil, ausgestattet ist, das konfiguriert ist, um einerseits eine offene Position, bei welcher der durch die Leitung (64) hindurchströmende Kraftstoffstrom (F2) maximal ist, und andererseits eine geschlossene Position, bei welcher der Kraftstoffstrom (F2) null ist, einzunehmen.

4. Schaltung nach einem der vorstehenden Ansprüche, **dadurch gekennzeichnet, dass** sie weiter eine Kraftstoffdosierungseinheit (7) umfasst, die mit der Vorrichtung (6) verbunden ist und die konfiguriert ist, um die Heizelemente (63) zu steuern.

5. Schaltung nach dem vorstehenden Anspruch, in Abhängigkeit von Anspruch 3, **dadurch gekennzeichnet, dass** die Einheit (7) konfiguriert ist, um das Ventil (65) in Abhängigkeit von einem Parameter des von der Pumpe (3) gelieferten Kraftstoffstroms, wie beispielsweise dem Druck des Kraftstoffstroms, zu regulieren.

6. Schaltung nach einem der vorstehenden Ansprüche, **dadurch gekennzeichnet, dass** jedes der Heizelemente (63) Metallrohre (630, 630') umfasst, die koaxial ineinander eingreifen.

7. Schaltung nach einem der vorstehenden Ansprüche, **dadurch gekennzeichnet, dass** jedes Rohr (630) eine durch ein Gitter oder ein Sieb aus Metall gebildete Wand umfasst.

8. Schaltung nach Anspruch 7, **dadurch gekennzeichnet, dass** mindestens eine Abdichtungs- und/oder dielektrische Naht (636) zwischen dem Gitter oder dem Sieb aus Metall der Heizelemente (63) angeordnet ist.

9. Schaltung nach einem der Ansprüche 2 bis 8, **dadurch gekennzeichnet, dass** die Vorrichtung (6) Kühlmittel (8) für den von der Kammer (60) oder der Abzweigleitung (64) austretenden Kraftstoffstrom umfasst.

10. Schaltung nach einem der vorstehenden Ansprüche, **dadurch gekennzeichnet, dass** die Öffnungen (634, 634') des oder der Rohre (630, 630') einen Durchmesser zwischen 0,1 und 1 mm aufweisen.

11. Schaltung nach einem der vorstehenden Ansprüche, **dadurch gekennzeichnet, dass** die Heizelemente (63) konfiguriert sind, um eine Heiztemperatur zwischen 200 und 300 °C, vorzugsweise in der Größenordnung von 250 °C, zu liefern.

12. Turbomaschine (10), insbesondere eines Luftfahrzeugs, umfassend eine Kraftstoffversorgungsschaltung (1) wie in einem der vorstehenden Ansprüche definiert.

13. Verfahren zur Versorgung einer Brennkammer (2) einer Turbomaschine (10), insbesondere eines Luftfahrzeugs, mit Kraftstoff mittels einer Kraftstoffversorgungsschaltung (1) nach einem der Ansprüche 1 bis 11, wobei dieses Verfahren einen Schritt der Steuerung der Heizelemente (63) zum Erhitzen des Kraftstoffs nur dann, wenn ein Parameter des von der Pumpe (3) gelieferten Kraftstoffstroms unter einer vorbestimmten Schwelle liegt, umfasst.

## Claims

1. A fuel supply circuit (1) for a combustion chamber (2) of a turbomachine (10), in particular for an aircraft, comprising:
- a fuel supply pump (3), said pump (3) being configured to provide a fuel flow at a predetermined flow rate,
- a plurality of fuel injectors (4),
- a ramp (5) for connecting the pump (3) to the injectors (4), and
- a device (6) for the thermal treatment of the fuel comprising a chamber (60) connected, on the one hand, to a fuel inlet (61) connected to the pump (3) and to a fuel outlet (62) connected to the ramp (5), heating elements (60) being located in this chamber (60) and being configured to heat the flow of fuel provided by the pump (3) up to a predetermined temperature so as to cause a coking of the fuel within the chamber (60),
the supply circuit being **characterised in that** said heating elements (63) comprise at least one perforated metal tube (630, 630') which comprises fuel passage orifices (634, 634') and which is associated with a heating electrode (632) for heating the tube (630) and thus the fuel passing through the tube (630).

2. The circuit according to the preceding claim, **characterised in that** it comprises a conduit (64) for bypassing said device (6), this conduit (64) extending between the pump (3) and the ramp (5) and allowing a fuel flow (F2) to leave the pump (3) and to supply the ramp (5) without passing through said device (6).

3. The circuit according to the preceding claim, wherein the bypass conduit (64) is equipped with a valve (65), for example a flap valve, which is configured to adopt, on the one hand, an open position in which the fuel flow (F2) passing through the conduit (64) is maximum, and on the other hand, a closed position in which this flow (F2) is zero.

4. The circuit according to one of the preceding claims, **characterised in that** it further comprises a fuel metering unit (7) which is connected to said device (6) and which is configured to control said heating elements (63).

5. The circuit according to the preceding claim, in dependence on claim 3, **characterised in that** said unit (7) is configured to control the valve (65) according to a parameter of the fuel flow provided by the pump (3), such as the pressure of the fuel flow.

6. The circuit according to one of the preceding claims, **characterised in that** each of said heating elements (63) comprises metal tubes (630, 630') coaxially engaged in each other.

7. The circuit according to any of the preceding claims, **characterised in that** the or each tube (630) comprises a wall formed by a metal mesh or metal screen.

8. The circuit of claim 7, **characterised in that** at least one seal and/or dielectric seal (636) is arranged between said metal meshes or metal screens of the heating elements (63).

9. The circuit according to one of claims 2 to 8, **characterised in that** the device (6) comprises means (8) for cooling the fuel flow leaving the chamber (60) or the bypass conduit (64).

10. The circuit according to one of the preceding claims, **characterised in that** the orifices (634, 634') of the tube or tubes (630, 630') have a diameter between 0.1 and 1 mm.

11. The circuit according to any of the preceding claims, **characterised in that** the heating elements (63) are configured to provide a heating temperature of between 200 and 300°C, preferably of the order of 250°C.

12. A turbomachine (10), in particular for an aircraft, comprising a fuel supply circuit (1) as defined in any of the preceding claims.

13. A method for supplying fuel to a combustion chamber (2) of a turbomachine (10), in particular for an aircraft, by means of a fuel supply circuit (1) according to one of claims 1 to 11, this method comprising a step of controlling the heating elements (63) with a view to heating the fuel only when a parameter of the fuel flow provided by the pump (3) is below a predetermined threshold.
